# EUROPÄISCHE PATENTSCHRIFT

(11) **EP 1 247 612 B1**
(45) Veröffentlichungstag und Bekanntmachung des Hinweises auf die Patenterteilung: **08.08.2007**
(21) Anmeldenummer: 02005002.7
(22) Anmeldetag: 06.03.2002
(51) Int. Cl.: B23Q 11/00, B24B 55/10

(54) **Handwerkzeugmaschine mit Staubabsaugung**
Hand-held machine tool with dust extraction
Machine-outil à main pourvue d'un dispositif d'aspiration de poussière

(30) Priorität: 04.04.2001 DE 10117310
(43) Veröffentlichungstag der Anmeldung: 09.10.2002
(73) Patentinhaber: ROBERT BOSCH GMBH, 70442 Stuttgart (DE)
(72) Erfinder: Reich, Doris, 70565 Stuttgart (DE); Wuensch, Steffen, 71088 Stuttgart (DE)

(56) Entgegenhaltungen:
- WO-A-00/73016
- DE-C- 698 612
- DE-U- 9 208 940
- DE-U- 29 512 517

## Beschreibung

### Stand der Technik

Die Erfindung geht aus von einer Staubbox nach der Gattung der Ansprüche 1-9.

Durch die GB 2 343 393 ist eine Handwerkzeugmaschine mit einer an ihrem Gehäuse angeordneten Staubabsaugung bekannt, die eine Staubbox mit Deckel trägt, wobei der Deckel innen einen Faltenfilter aufweist.

Die Staubbox trägt Überrasthebel, mit denen sie form- und kraftschlüssig mit der Handwerkzeugmaschine verbindbar ist. Die Überrasthebel sind bei extrem hartem Baustellenbetrieb unter Umständen überfordert.

### Vorteile der Erfindung

Die erfindungsgemäße Staubbox mit den Merkmalen des Anspruchs 1 hat demgegenüber den Vorteil, besonders sicher und dicht am Ausblasstutzen der Handwerkzeugmaschine spannbar zu sein und auch härtesten Beanspruchungen und Schwingungen auf Baustellen auszuhalten.

Diese robuste Lösung ist dadurch besonders einfach, dass ein Teilbereich des Einblasstutzens selbst als Spannbacke ausgestaltet ist.

Dadurch dass der Einblasstutzen handbetätigte Spannmittel trägt, mit denen die Spannbacke in Schließposition versetzbar ist und dadurch die Staubbox an dem Ausblasstutzen unverlierbar festhält, ist die Staubbox besonders wirksam gegenüber der der Handwerkzeugmaschine abgedichtet und zugleich leicht lösbar befestigt.

Dadurch dass die einzige Spannbacke vorteilhafterweise federvorgespannt offenhaltbar ist, ist die Staubbox besonders bequem und schnell mit der Handwerkzeugmaschine kuppelbar bzw. lösbar.

Dadurch dass als Spannmittel eine insbesondere C-förmig gebogene Blattfeder dient, mittels der zwischen deren beiden Enden die Spannbacke in eine Schließposition versetzbar ist, ist die Staubbox mit Spannmitteln besonders kostengünstig und robust.

Dadurch dass die Blattfeder mit einem Ende außen am Einblasstutzen schwenkbar gelagert und mit dem anderen Ende vorzugsweise mit Rastmitteln, am Einblasstutzen verrastbar ist, ist das Spannen und Lösen der Staubbox an der Handwerkzeugmaschine besonders einfach zu handhaben.

Dadurch, dass der Einblasstutzen der Staubbox aus elastischem Werkstoff besteht insbesondere aus Kunststoff, ist die in den Einblasstutzen integrierte Spannbacke besonders einfach herstellbar.

Dadurch, dass die Spannbacke am Einblasstutzen durch einen quer und einen diesen schneidenden radial verlaufenden Umfangsschlitz gebildet wird, ist die Staubbox mit Spannbacke mit minimalen Änderungsaufwand auf der Basis der bisher bekannten Staubboxen herstellbar.

Dadurch, dass die Spannbacke Gegenrastmittel in Form einer Vertiefung aufweist, in die die Rastmittel des Spannmittels eingreifen können, ist das Spannbackenprinzip zum Befestigen der Staubbox mit einer sehr einfachen gestalbaren Blattfeder möglich.

Dadurch dass die Blattfeder 31 zum Spannen der Spannbacke 28 eine seitlich abstehende Taste 65 aufweist, ist mit besonders geringem Aufwand ein leicht bedienbares Lösen bzw. Befestigen der Staubbox an der Handwerkzeugmaschine möglich.

Das Spannzangenprinzip zum Befestigen der Staubbox an der Handwerkzeugmaschine mit der Blattfeder und der Dichtlippe ist auch für Handwerkzeugmaschinen ohne integrierte Staubabsaugung geeignet, wenn außen an der Staubbox auf die Außenseite des des Filter tragenden Deckels ein Staubabsaugstutzen zum Anschluß eines Staubsaugers oder dgl. vorgesehen ist.

Dadurch, daß sich die Staubbbox außer am Staubausblasstutzen der Handwerkzeugmaschine mit einem Vorsprung seines oberen Deckels an der Handwerkzeugmaschine festhält, sind die Verformungskräfte bei voller Staubfüllmenge so verringert, daß die Wandquerschnitte der Staubbbox gering sein können und diese dadurch besonders leicht aber stabil ist, d.h. nicht

Dadurch, daß die Staubbbox als oben offener Kasten mit lösbarem, die Öffnung von oben verschließendem Deckel versehen ist, tritt ein nur geringer Druckverlust beim Staubabsaugen auf, wobei durch Öffnen des Deckels der Staub besonders bequem ohne Verwirbelung und Belastung der Umwelt entsorgt werden kann.

Dadurch, daß nur der Deckel ein Filter, insbesondere Faltenfilter, trägt und als einziger Teil der Staubbox mit Luftdurchtrittsöffnungen versehen ist, kann die Filterfläche besonders groß dimensioniert werden. Dadurch staut sich die den Staub transportierende Luft nur minimal und der Wirkungsgrad der Staubabsaugung ist hoch. Außerdem kann sich der Staub ab einer bestimmten Schichtdicke selbsttätig vom Faltenfilter lösen und der Schwerkraft folgend in die Staubbox fallen.

Dadurch, daß der Faltenfilter nur im Deckel der Staubbox angeordnet ist, ist er besonders leicht auswechselbar, indem er entweder neu eingeklebt wird oder der gesamte Deckel mitsamt dem Filter ausgetauscht wird.

Dadurch, daß der Eintrittsstutzen der Staubbox mittels Ventil verschließbar ist, ist beim Lösen der Staubbox von der Handwerkzeugmaschine ein ungewolltes Austreten von Staub wirksam verhinderbar.

### Zeichnung

Die Erfindung ist nachstehend anhand eines Ausführungsbeispiels mit zugehörigen Zeichnungen näher erläutert.

Es zeigen
Figur 1 einen Längsschnitt einer Handwerkzeugmaschine mit erfindungsgemäßer Staubbox,
Figur 2 eine Draufsicht auf die Handwerkzeugmaschine gemäß Figur 1,
Fig. 3 zeigt eine räumliche Darstellung der Staubbox mit geschlossenem bzw. verrastetem Spannmittel.
Fig. 4 zeigt die gleiche Ansicht bei geöffnetem Spannmittel.
Fig. 5 zeigt eine schematische Darstellung eines Querschnitts der Staubbox im Bereich der Spannmittel bei verrastetem Spannmittel,
Fig. 6 die gleiche Darstellung bei geöffnetem Spannmittel,
Fig. 7 zeigt das Spannmittel,
Fig. 8 eine Draufsicht auf den scharnierartigen Bereich des an der Staubbox befestigten Spannmittels.
Fig. 9 zeigt die Unteransicht der Spannbacke 28 mit dem Gegenrastmittel,
Fig. 10 zeigt die Ansicht schräg von vorn auf die Staubbox ohne das Spannmittel,
Fig. 11 zeigt eine weitere Draufsicht auf die Spannbacke mit geöffnetem Spannmittel,
Fig. 12 zeigt eine Ansicht der Staubbox von unten mit verdeutlichten radial umlaufendem Schlitz im Bereich der Spannbacke,
Fig. 13 zeigt eine Seitenansicht gemäß Fig. 12 und
Fig. 14 einen Querschnitt der Staubbox im Bereich des radial umlaufenden Schlitzes im Bereich der Spannbacke.

### Beschreibung des Ausführungsbeispiels

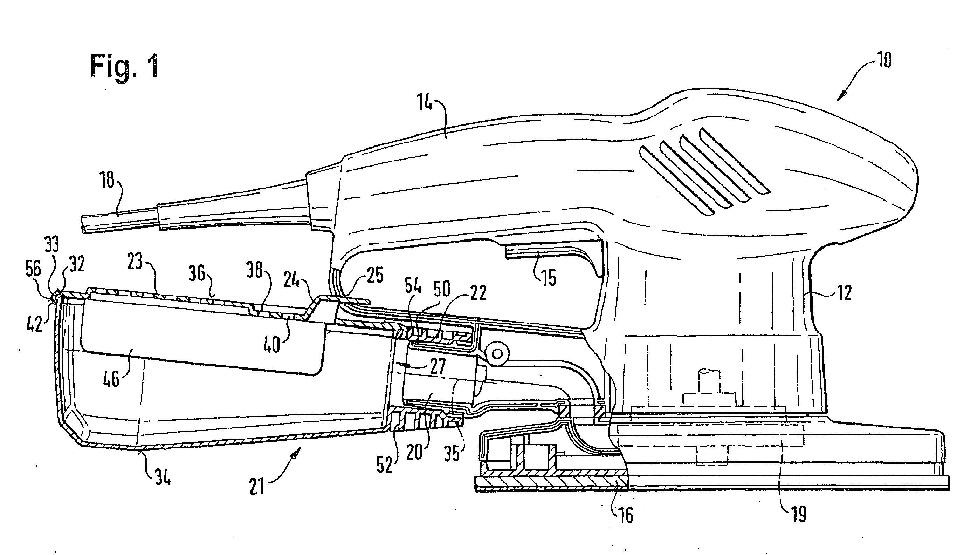

Der Längsschnitt in Figur 1 zeigte eine als Schwingschleifer ausgestaltete Handwerkzeugmaschine 10 mit einem Gehäuse 12, das einen Handgriff 14 mit Schalter 15 aufweist, an dem unten ein als Schleifplatte ausgestaltetes Werkzeug 16 bewegbar befestigt ist. Die Handwerkzeugmaschine 10 trägt am hinteren Ende des Handgriffs 14 eine elektrische Anschlußleitung 18 und im Inneren des Gehäuses 12 ein Lüfterrad 19. Dieses erzeugt beim Betrieb der Handwerkzeugmaschine über der Schleifplatte 16 einen Unterdruck. Dadurch wird Schleifstaub an und unter der Schleifplatte 16 abgesaugt und durch einen Ausblasstutzen 20 des Gehäuses 12 geblasen.

Der Ausblasstutzen 20 trägt einen darüber gestülpten Einblasstutzen 22 einer formsteifen, freitragend angeordneten Staubbox 21. Diese ist - bis auf die Einblasöffnung 27 des Einblasstutzens 22 und ihre Oberseite - luftdicht. Die Oberseite der Staubbox 21 wird durch einen Deckel 23 gebildet, aus dessen Oberseite 36 nach oben ein Haken 24 tritt zum Eingriff in eine Halteöffnung 25 im hinteren Bereich des Handgriffs 14. Mit dem Haken 24 hält sich die Staubbox 21 zusätzlich am Gehäuse 12 der Handwerkzeugmaschine 10 fest, so daß die Gehäusestruktur der Staubbox 21 mit besonders dünnen Wandquerschnitten und damit besonders leicht gebaut werden kann.
Der Deckel 23 der Staubbox 21 hält sich an der Oberkante 32 der Staubbox 21, die einen umlaufenden Wulst 33 bildet, federelastisch überrastend mit seinem Schnapprand 42 kraftund formschlüssig besonders dicht fest.

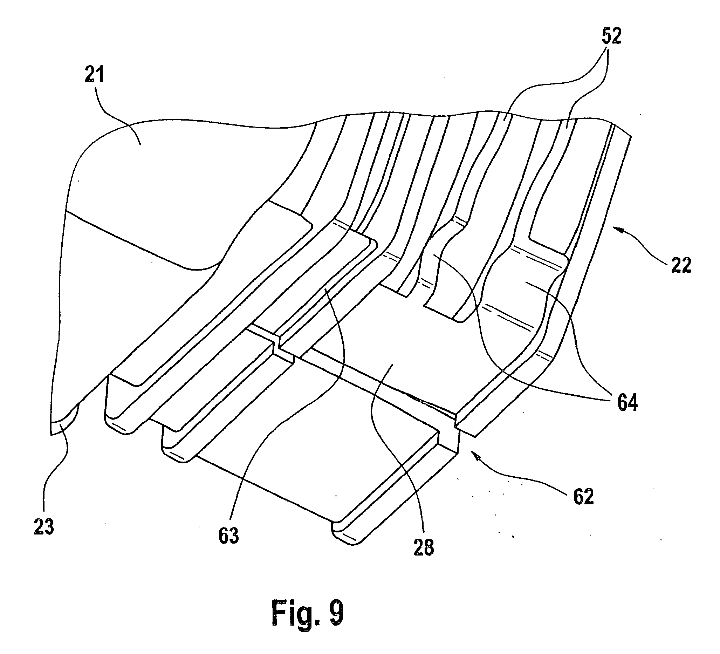

Die Unterseite 34 der Staubbox 21 verläuft gegenüber der Längsachse des Einblasstutzens 22 geneigt, so daß die Staubbox 21 im Längsschnitt keilförmig gegenüber der Achse 35 verläuft und sich zur Handwerkzeugmaschine 10 hin verjüngt. Die Oberseite 36 des Deckels 23 trägt kreisrunde Luftaustrittslöcher 40, denen ein als Faltenfilter ausgestaltetes Filterelement 48 aus Spezialpapier vorgeschaltet ist, so daß dessen Oberseite 49 (Fig. 9) der Unterseite des Deckels 23 zugewandt ist. Außerdem ist die Oberseite 36 des Deckels 23 im Bereich des Hakens 24 mit einem in die Staubbox 21 gerichteten Einzug 38 mit u-förmig verlaufender Kontur versehen, der die Struktur des Deckels 23 versteift und Freiraum zum Durchtritt größerer, weiter ausladender Gehäusekonturen anderer Handwerkzeugmaschinen bietet.

Der Deckel 23 trägt einstückig zwei parallel zu den Seitenkanten 58 der Staubbox 21 verlaufende Seitenlamellen 46, die kielartig in das Innere der Staubbox 21 hineinragen und eine seitliche Begrenzung und einen mechanischen Schutz des Filterelements 48 bilden, falls der Deckel von der Staubbox 21 abgenommen und abgelegt wird bzw. falls der Staub vom Filterelement 48 abgeklopft wird.

Der Einblasstutzen 22 der Staubbox 21 weist im Inneren eine umlaufende, gummielastische Dichtlippe 50 auf, die den Ausblasstutzen 20 der Handwerkzeugmaschine luftdicht umschließt. Außerdem trägt der Einblasstutzen 22 der Staubbox 21 oben und unten Rippen 52, die die Steifigkeit der Staubbox 21 bei kleinem Wandquerschnitt verbessern.

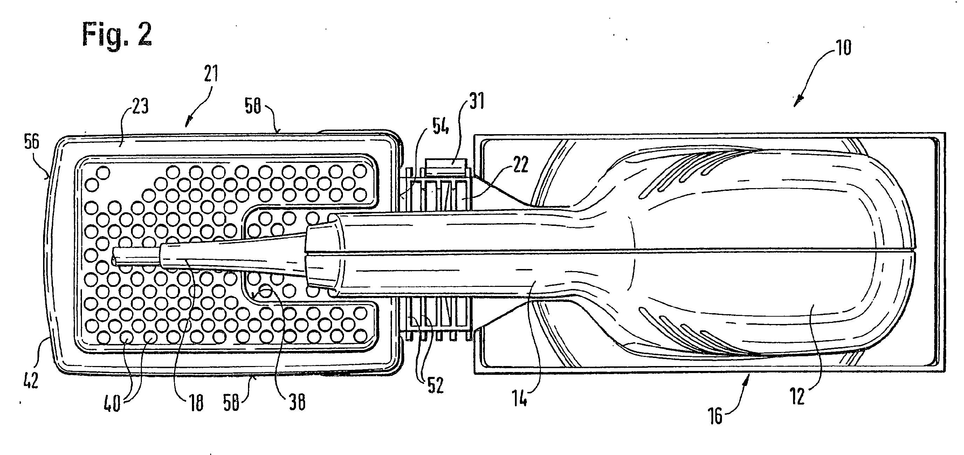

Figur 2 zeigt die zuvor genannten Einzelheiten der Handwerkzeugmaschine 10 mit der Staubbox 21, wobei über die Figur 1 hinaus besonders gut erkennbar sind: Der Deckel 23, die Löcher 40 zum Durchtritt der vom Staub gereinigten Ausblasluft nach außen und eine Blattfeder 31 zum spannzangenartigen Befestigen der Staubbox 21 an der Handwerkzeugmaschine 10.

Deutlich wird auch, daß die Grundfläche des Handwerkzeugs 10 durch die rechteckige Schleifplatte 16 gebildet wird, und daß die Hinterkante 56 der Staubbox 21 bzw. des Deckels 23 nach außen gewölbt ist.

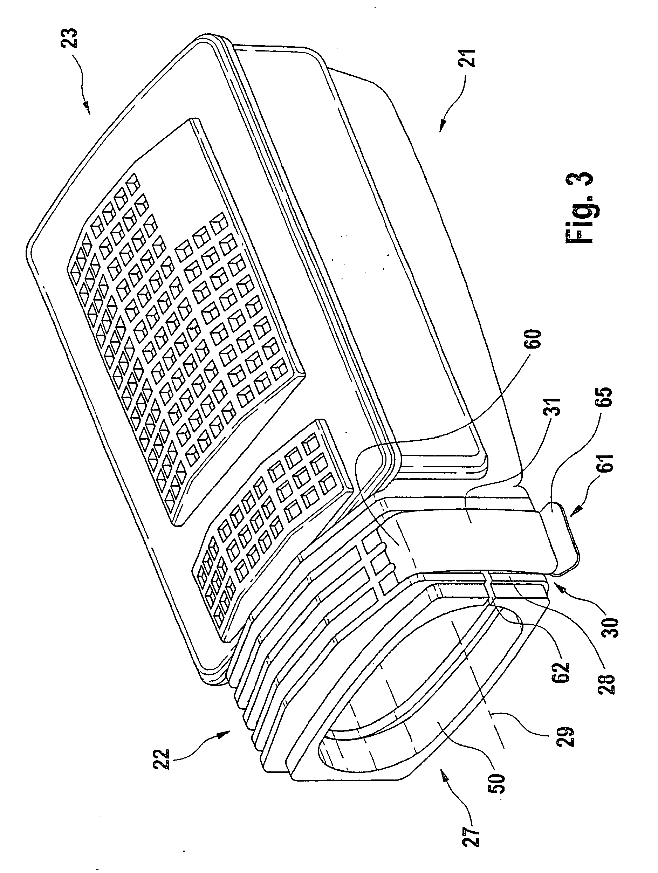

Fig. 3 verdeutlicht die Ausgestaltung der Staubbox 21 mit einem Deckel 23 sowie einer stutzenartig in die Einblasöffnung 27 eingeschobene Dichtlippe 50 aus gummielastischem Material, die den Querschnitt 62 und den nicht mit dargestellten radial umlaufenden Schlitz 63 von innen gegen Staubaustritt abdichtet. Deutlich erkennbar ist auch das Spannmittel 30, dass als C-förmige Blattfeder 31 ausgestaltet ist. Weiter ist zu sehen, dass die Blattfeder 31 mit ihrem oberen Ende 60 scharnierartig im äußeren Bereich des Querschlitzes 62 mit Vorspannung spannzangenartig zusammen. Außerdem ist im unteren Bereich der Einblasöffnung eine strichpunktierte Linie eingezeichnet, die die Schwenkachse der Spannbacke 28 bedeutet.

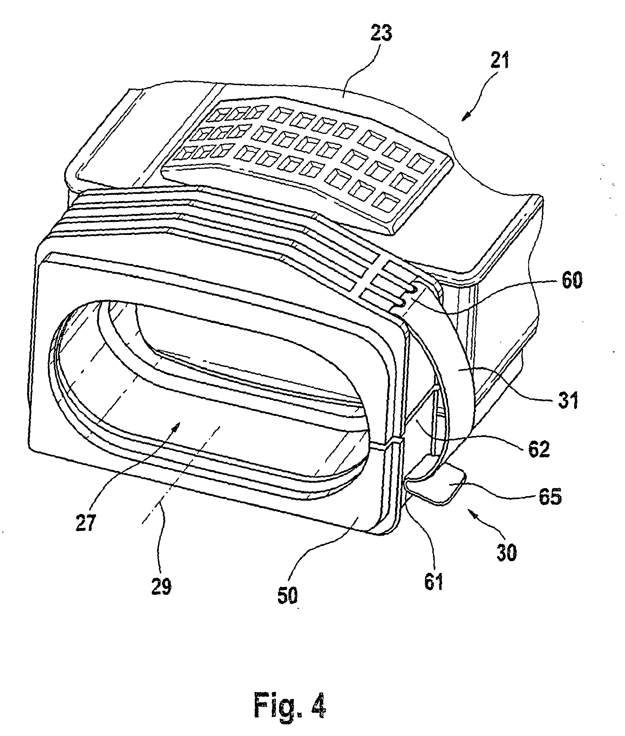

Fig. 4 zeigt die Staubbox gemäß Fig. 3 mit den zuvor genannten Einzelheiten, die hier nicht noch einmal aufgeführt werden sollen. Im Unterschied zu Fig. 3 ist in Fig. 4 die Blattfeder 31 in Löseposition geschwenkt, so dass der Querschlitz 62 weiter geöffnet ist als in Fig. 3.

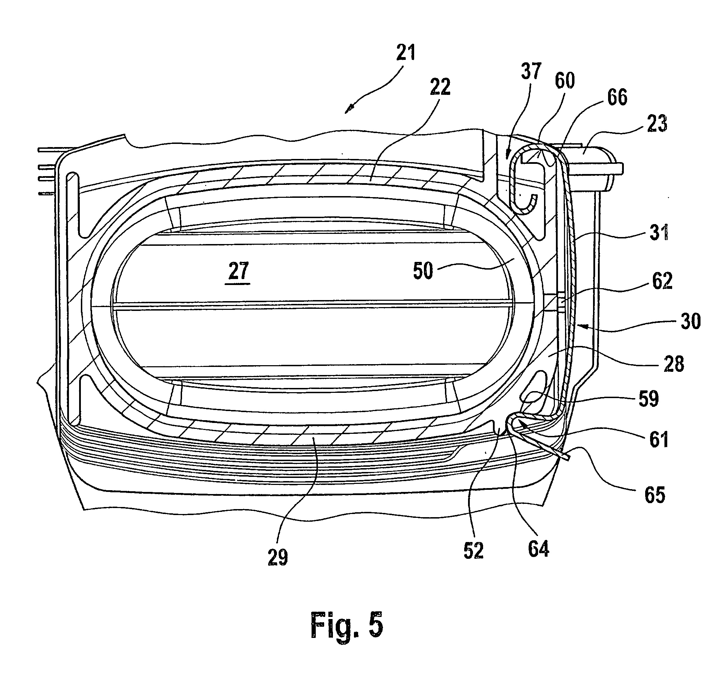

Fig. 5 zeigt einen Querschnitt der Staubbox 21 im Bereich des Spannmittels 30. Darin ist deutlich die Kontur der C-förmigen Blattfeder 31 erkennbar, die an ihrem unteren Ende 61 ein nach außen abgewinkeltes Stück trägt, dass als Taste 65 dient. Das obere Ende der Blattfeder 31 ist in einen Schlitz 37 des Einblasstutzens 22 geschoben. Der Schlitz 37 ist schmaler als das umgebogene Ende 60 breit ist, so dass dieses unverlierbar im Schlitz 37 festgehalten ist und darin wie in einem Schwenklager gehalten wird.

Das untere Ende 61 der Blattfeder 31 ist erkennbar in einem U-förmig vertieftem Bereich verrastet, der als Gegenrastmittel dient und den Querschlitz 62 verengt indem die Spannbacke 28 nach oben um die Achse 29 verschwenkt wird. Dabei wird die innere Kontur der Spannbacke 28 gegen die Dichtlippe 50 gepreßt und drückt diese dann weiter dichtend gegen die Außenkontur des Ausblasstutzens 20 der hier nicht mehr dargestellt ist.

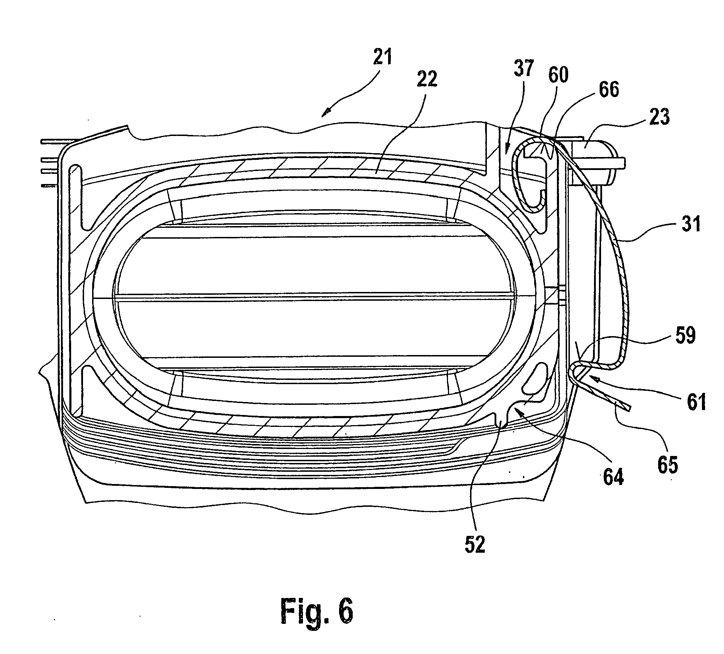

Fig. 6 zeigt die gleiche Ansicht wie Fig. 5, wobei die Blattfeder 31 im Schwenklager 66 verschwenkt ist und mit ihrem unteren Ende 61 bzw. ihrem Rastmittel 59, der als Vorsprung ausgestaltet ist, aus dem Gegenrastmittel 64, dass als Vertiefung in einer Rippe 52 ausgestaltet ist, herausgetreten ist.

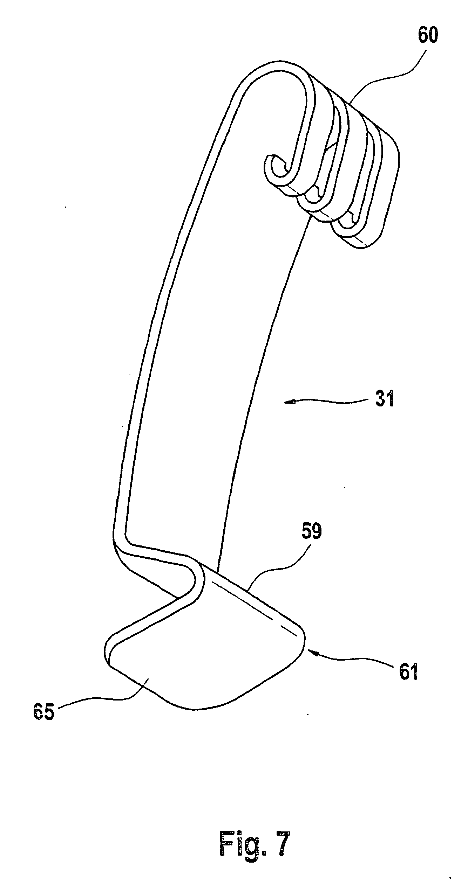

Fig. 7 zeigt die Einzelheiten der Blattfeder 31 in räumlicher Darstellung, deren Einzelheiten auch deutlich aus Fig. 5 und 6 hervorgehen. Diese werden hier nicht noch mal aufgeführt.

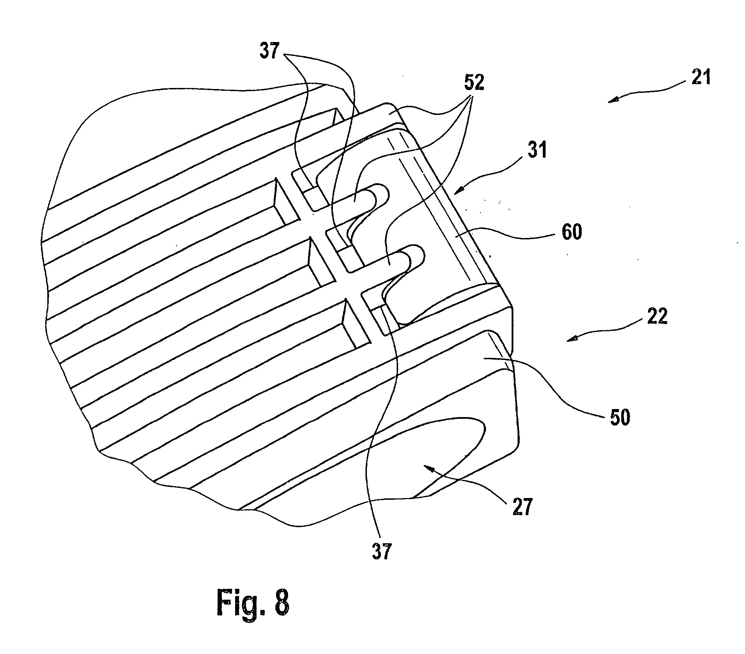

Fig. 8 zeigt eine Draufsicht auf den oberen Bereich des Einblasstutzens 22 der Staubbox 21, wobei die krallenartige Ausgestaltung des oberen Endes 60 der Blattfeder 31 deutlich wird, die zwischen die Rippen 52 in die Vertiefungen 37 greifen und dort unverlierbar festgehalten sind.

Hier wird noch mal besonders deutlich die Ausgestaltung der Dichtlippe 50 als flanschartiges, den Einblasstutzen 22 durchziehendes Teil ausgestaltet ist.

Fig. 9 zeigt die Draufsicht von unten auf die Spannbacke 28 mit dem Gegenrastmittel 64, dass in den Rippen 52 als Vertiefung eingearbeitet ist.

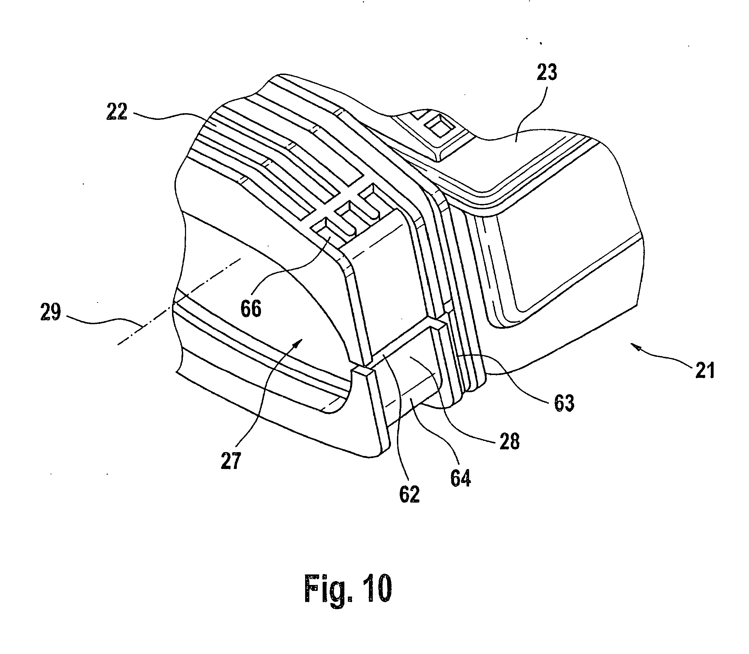

Fig. 10 zeigt eine Ausschnitt des Einblasstutzens 22 ohne die eingehängte Blattfeder 31, wobei besonders deutlich der Querschlitz 62 wird, der senkrecht geschnitten wird durch den Verlauf des radial umlaufenden Teilschlitzes 63. Diese beiden Schlitze 62, 63 bewirken die spannzangenartige Bewegbarkeit des Teilbereichs des Einblasstutzens 22.

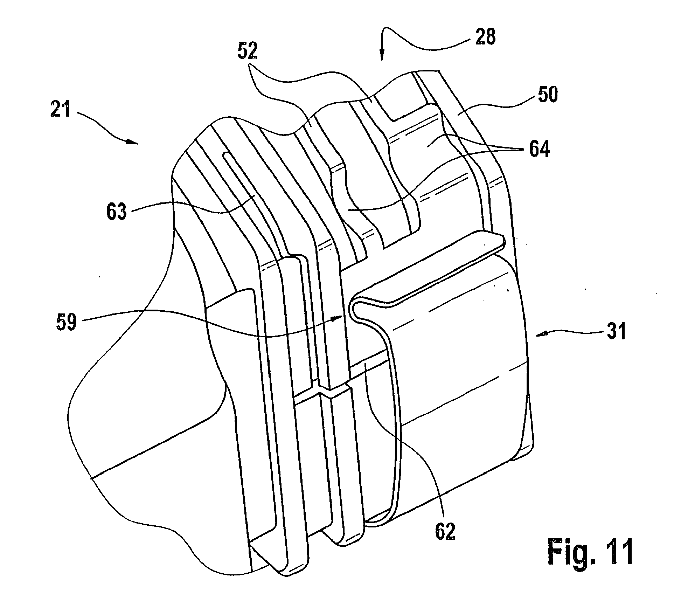

Fig. 11 zeigt eine weitere Unteransicht der Spannbacke 28, wobei die Ausgestaltung der Rippen 52 besonders deutlich wird. Diese tragen in ihrem Eckbereich in Richtung Blattfeder 31 die als Vertiefung ausgeführten Gegenrastmittel zum Eingriff der als Vorsprung ausgestalteten Rastmittel 59 der Blattfeder 31. Deutlich sind hierin auch die Schlitze 62, 63 zu erkennen.

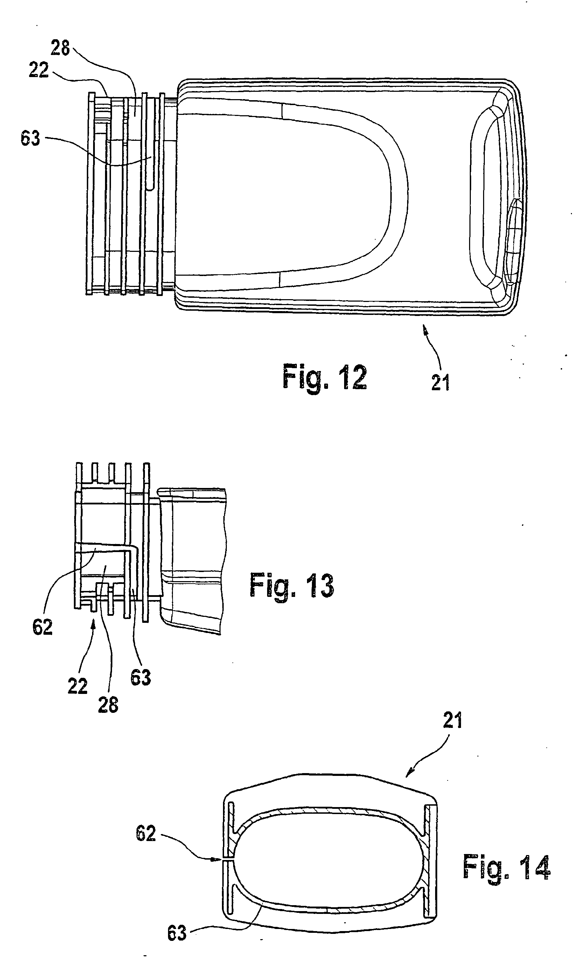

Fig. 12, 13 und 14 zeigen eine schematisch dargestellte Unteransicht, Seitenansicht bzw. einen Querschnitt der Filterbox 21 im Bereich des Einblasstutzens 22, wobei die Schlitze 62, 63 nochmals besonders deutlich erkennbar sind.

Die Staubbox 21 wird auf den Ausblasstutzen 20 bzw. den Staubaustrittstutzen der Handwerkzeugmaschine geschoben. Dann wird durch Fingerdruck auf die Mitte der c-förmig gebogenen Blattfeder 31 diese mit ihrem unteren Ende 61 zum Gegenrastmittel 64 am Einblasstutzen 22 geschwenkt. Tritt das Rastmittel 59 der Blattfeder 31 in Form eines Vorsprungs in das Gegenrastmittel 64 in Form passender Vertiefungen an den Rippen 52 ein, ist die Staubbox 21 am Einblasstutzen 22 verriegelt. Wird der winklig nach außen gebogene, als Taste 65 dienende Bereich des unteren Endes 61 der Blattfeder 31 nach außen geschwenkt, ist die Blattfeder 31 entriegelt und die Staubbox 21 kann leicht vom Einblassutzen 22 heruntergezogen werden.

## Patentansprüche

1. Staubbox (21) zum Kuppeln mit dem Staubausblasstutzen (20) einer Handwerkzeugmaschine (10), mit einem elastisch verformbaren und dichtenden Mittel in dem umgreifenden Bereich ihres Einblasstutzens (22), insbesondere in Gestalt einer umlaufenden Dichtlippe (50), **dadurch gekennzeichnet, dass** die Staubbox (21) im Bereich ihres Einblasstutzens (22) eine mit handbetätigbaren Spannmitteln (30) versehene Spannbacke (28) aufweist, die geeignet ist, den Einblasstutzen (22) spannzangenartig zu umgreifen und diesen am Ausblasstutzen (20) zu spannen, wobei die Spannbacke (28) durch Betätigen der Spannmittel (30) in Schließposition versetzbar ist und dadurch die Staubbox (21) am Ausblasstutzen (20) unverlierbar festhaltbar ist

2. Staubbox nach Anspruch 1, **dadurch gekennzeichnet, dass** die Spannbacke (28) in die Kontur des Einblasstutzens (22) integriert ist.

3. Staubbox nach Anspruch 2, **dadurch gekennzeichnet, dass** die Spannbacke (28) federnd vorgespannt offenhaltbar ist.

4. Staubbox nach Anspruch 3, **dadurch gekennzeichnet, dass** als Spannmittel (30) eine, insbesondere C-förmig gebogene, Blattfeder (31) dient, mittels der zwischen deren beiden Enden (60, 61) die Spannbacke (28) in eine Schließposition versetzbar ist.

5. Staubbox nach Anspruch 4, **dadurch gekennzeichnet, das**s die Blattfeder (31) mit einem Ende (60) außen am Einblasstutzen (22) schwenkbar gelagert und mit dem anderen Ende (61), vorzugsweise dort Rastmittel (59) tragend, am Einblasstutzen (22) verrastbar ist.

6. Staubbox nach Anspruch 5, **dadurch gekennzeichnet, dass** zumindest der Einblasstutzen (22) der Staubbox (21) aus elastischem Werkstoff, insbesondere aus Kunststoff, besteht.

7. Staubbox nach Anspruch 6, **dadurch gekennzeichnet, dass** die Spannbacke (28) am Einblasstutzen (22) durch einen Querschlitz (62) und einen diesen schneidenden, radial verlaufenden Umfangsschlitz (63) gebildet wird.

8. Staubbox nach Anspruch 7, **dadurch gekennzeichnet, dass** die Spannbacke (28) Gegenrastmittel, insbesondere eine Vertiefung (64), aufweist, in die die Rastmittel (59) des Spannmittels (30) eingreifen.

9. Staubbox nach Anspruch 4, **dadurch gekennzeichnet, dass** die Blattfeder (31) mit ihrem oberen Ende (60) unverlierbar aber lösbar am Einblasstutzen (22), insbesondere in Einführschlitzen (37), halterbar und scharnierartig verschwenkbar gelagert ist und an ihrem unteren Ende (61) einen seitlich nach außen abgewinkelten Bereich aufweist, der als Taste (65) zum Lösen des Spannmittels (30) und damit zum Öffnen der Spannbacke (28) dient.

## Claims

1. Dust box (21) for coupling to a dust blow-out connecting piece (20) of a portable power tool (10), having an elastically deformable and sealing means in the enclosing region of its blow-in connecting piece (22), in particular in the form of an encircling sealing lip (50), **characterized in that** the dust box (21), in the region of its blow-in connecting piece (22), has a clamping jaw (28) which is provided with manually actuable clamping means (30) and which is suitable for enclosing the blow-in connecting piece (22) in a collet-like manner and for clamping the latter on the blow-out connecting piece (20), wherein the clamping jaw (28) can be shifted into the closed position by actuation of the clamping means (30) and as a result the dust box (21) can be captively held in place on the blow-out connecting piece (20).

2. Dust box according to Claim 1, **characterized in that** the clamping jaw (28) is integrated in the contour of the blow-in connecting piece (22).

3. Dust box according to Claim 2, **characterized in that** the clamping jay (28) can be held open in an elastically prestressed manner.

4. Dust box according to Claim 3, **characterized in that** a leaf spring (31), in particular bent in a C shape, serves as clamping means (30), by means of which leaf spring (31) the clamping jaw (28) can be shifted into a closed position between its two ends (60, 61).

5. Dust box according to Claim 4, **characterized in that** the leaf spring (31) is pivotably mounted with one end (60) on the outside on the blow-in connecting piece (22) and can be latched with the other end (61), preferably carrying latching means (59) there, on the blow-in connecting piece (22).

6. Dust box according to Claim 5, **characterized in that** at least the blow-in connecting piece (22) of the dust box (21) is made of an elastic material, preferably plastic.

7. Dust box according to Claim 6, **characterized in that** the clamping jaw (28) on the blow-in connecting piece (22) is formed by a transverse slot (62) and by a radially running circumferential slot (63) intersecting the latter.

8. Dust box according to Claim 7, **characterized in that** the clamping jaw (28) has mating latching means, in particular a recess (64), in which the latching means (59) of the clamping means (30) engage.

9. Dust box according to Claim 4, **characterized in that** the leaf spring (31) is mounted with its top end (60) in such a way that it can be held in a captive but releasable manner on the blow-in connecting piece (22), in particular in insertion slots (37), and so as to be pivotable in a hinge-like manner and has at its bottom end (61) a region which is angled laterally outwards and serves as a button (65) for releasing the clamping means (30) and thus for opening the clamping jaw (28).

## Revendications

1. Boîte à poussière (21) à coupler au tuyau d'éjection de poussière (20) d'une machine-outil portative (10), dont moyen déformable élastiquement et étanche entoure le tuyau d'aspiration (22), en particulier sous la forme d'une lèvre d'étanchéité périphérique (50),
**caractérisée en ce que**
la boîte à poussière (21) présente, au niveau du tuyau d'aspiration (22), une mâchoire de serrage (28) pourvue de moyens de serrage (30) actionnables à la main, qui entourent le tuyau d'aspiration (22) à la manière d'une pince pour serrer celui-ci sur le tuyau d'éjection (20), la mâchoire de serrage (28) étant déplacée en position de fermeture en actionnant les moyens de serrage (30) fixant ainsi la boîte à poussière (21) de façon imperdable sur le tuyau d'éjection (20).

2. Boîte à poussière selon la revendication 1,
**caractérisée par**
la mâchoire de serrage (28) intégrée dans le contour du tuyau d'aspiration (22).

3. Boîte à poussière selon la revendication 2,
**caractérisée en ce que**
la mâchoire de serrage (28) peut être maintenue ouverte sous une précontrainte élastique.

4. Boîte à poussière selon la revendication 3,
**caractérisée en ce qu'**
un ressort à lames (31), courbé en forme de C, sert de moyen de serrage (30), par lequel la mâchoire de serrage (28) peut être déplacée en position de fermeture entre ses deux extrémités (60, 61).

5. Boîte à poussière selon la revendication 4,
**caractérisée en ce que**
le ressort à lames (31) s'articulé extérieurement par une extrémité (60) sur le tuyau d'aspiration (22) et s'encliquète sur le tuyau d'aspiration (22) par l'autre extrémité (61), qui porte des moyens d'encliquetage (59).

6. Boîte à poussière selon la revendication 5,
**caractérisée en ce qu'**
au moins le tuyau d'aspiration (22) de la boîte à poussière (21) est en matériau élastique, en particulier en matière plastique.

7. Boîte à poussière selon la revendication 6,
**caractérisée en ce que**
la mâchoire de serrage (28) est formée sur le tuyau d'aspiration (22) par une fente transversale (62) et une fente périphérique (63) radiale coupant celle-ci.

8. Boîte à poussière selon la revendication 7,
**caractérisée en ce que**
la mâchoire de serrage (28) comporte des moyens d'encliquetage associés, en particulier un creux (64), dans lesquels s'engagent les moyens d'encliquetage (59) du moyen de serrage (30).

9. Boîte à poussière selon la revendication 4,
**caractérisée en ce que**
par son extrémité supérieure (60) le ressort à lames (31) est monté de manière imperdable mais séparable sur le tuyau d'aspiration (22), dans des fentes d'introduction (37), de manière à supporter et pivoter comme une charnière, et il présente à son extrémité inférieure (61) une partie coudée vers l'extérieur, qui sert de touche (65) pour relâcher le moyen de serrage (30) et ouvrir ainsi la mâchoire de serrage (28).
